# FASCICULE DE BREVET EUROPEEN

(11) **EP 2 055 045 B1**
(45) Date de publication et mention de la délivrance du brevet: **20.02.2019**
(21) Numéro de dépôt: 07787791.8
(22) Date de dépôt: 20.07.2007
(51) Int. Cl.: H04L 12/18, H04L 1/00, H04L 5/02, H04W 74/08

(54) **DISPOSITIF DE TRAITEMENT POUR LA TRANSMISSION DE MESURES EFFECTUÉES PAR DES TERMINAUX RADIO**
VERARBEITUNGSEINRICHTUNG ZUM SENDEN VON DURCH FUNKENDGERÄTE AUSGEFÜHRTE MESSUNGEN
PROCESSING DEVICE FOR TRANSMITTING MEASUREMENTS PERFORMED BY RADIO TERMINALS

(30) Priorité: 17.08.2006 FR 0653387; 25.10.2006 FR 0654505
(43) Date de publication de la demande: 06.05.2009
(73) Titulaire: Alcatel Lucent, 91620 Nozay (FR)
(72) Inventeur: BOURDEAUT, Stanislas, 75015 Paris (FR)
(74) Mandataire: Browne, Robin Forsythe
(86) Numéro de dépôt international: PCT/EP2007/057546
(87) Numéro de publication internationale: WO 2008/019924

(56) Documents cités:
- EP-A- 1 641 189
- WO-A-2005/060132
- GB-A- 2 382 002
- US-A1- 2002 056 132
- US-A1- 2003 134 655
- US-A1- 2005 113 099

## Description

L'invention concerne les réseaux de communication radio capables de diffuser par voie d'ondes sur une voie dite aller, au moyen d'une porteuse dédiée à un service de diffusion, des données vers des terminaux de communication radio.

On entend ici par « réseau de communication radio » tout type de réseau disposant d'un réseau d'accès radio capable de diffuser des données. Il pourra notamment s'agir d'un réseau satellitaire, comme par exemple un réseau SDMB (pour « Satellite Digital Multimedia Broadcast »), ou d'un réseau radio terrestre, comme par exemple un réseau UMTS apte à la diffusion (par exemple de type MBMS (pour « Multimedia Broadcast / Multicast Services»), ou son évolution appelée LTE (« Long Term Evolution »), ou GPRS, ou DVB-H (pour « Digital Video Broadcasting - Handhelds » - télévision mobile)), ou encore d'un réseau hybride (satellitaire et terrestre).

EP-1 641 189 décrit un terminal de communication (UE) pour le réseau MBMS d'un système de communication. US-2005/113099 décrit un procédé pour adapter le schéma de codage pour un canal commun de liaison descendante portant une transmission point à multipoint.

Par ailleurs, on entend ici par « voie aller » la voie permettant de diffuser des données du réseau vers les terminaux (de communication) radio (elle est également appelée voie descendante (ou « downlink ») dans le cas d'un réseau terrestre), et par « voie retour » la voie permettant à des terminaux radio de transmettre des données au réseau (elle est également appelée voie montante (ou « uplink ») dans le cas d'un réseau terrestre).

En outre, on entend ici par « terminal de communication radio » tout équipement de communication fixe ou mobile (ou portable ou encore cellulaire) capable d'échanger des données par voie d'ondes avec un autre équipement, via un réseau d'accès radio. Par conséquent, il pourra par exemple s'agir d'un téléphone fixe ou mobile (ou cellulaire), d'un ordinateur fixe ou portable, ou d'un assistant personnel numérique (ou PDA), dès lors qu'il est équipé de moyens de communication radio, éventuellement satellitaires, aptes à la réception de données diffusées.

De plus, on entend ici par « service de diffusion » tout service de diffusion unidirectionnelle de type point-à-multipoints (« multicast » ou « broadcast ») ou point-à-point (ou « unicast ») de contenu(s) multimédia, et notamment le service de diffusion de type MBMS, le service de diffusion de type SDMB, le service de diffusion de type DVB-H, y compris sa variante adaptée aux réseaux satellitaires, et les services de diffusion proposés dans l'évolution de l'UMTS appelée LTE (« Long Term évolution ») et dans les réseaux GSM/GPRS (MBMS/GPRS) ou WBCDMA. Il est rappelé que le service de diffusion MBMS est défini à partir de la sixième version des spécifications 3GPP (3rd Generation Partnership Project), qui régit la transmission de données multimédia dans les réseaux mobiles (ou cellulaires), comme par exemple les réseaux UMTS ou EDGE, et en particulier dans les spécifications techniques 3GPP TS 25.346 et 23.246 (notamment accessibles sur le site Internet du 3GPP à l'adresse « ftp.3gpp.org »).

Enfin, on entend ici par « contenu multimédia » des fichiers de données (ou « data » en anglais), de la voix, des fichiers audio, ou des vidéos, notamment.

Comme le sait l'homme de l'art, dans certains réseaux des types précités, et notamment dans l'évolution LTE de l'UMTS, il est possible d'adapter, au niveau du réseau d'accès radio (ou RAN), en fonction des conditions radio, le(s) schéma(s) de modulation et d'encodage des données qui doivent être diffusées vers certains terminaux radio sur la voie aller, au moyen d'une porteuse dédiée (par exemple la porteuse MBMS).

Cette adaptation peut par exemple se faire à partir de rapports de mesures transmis par les terminaux radio sur la voie retour. Par exemple, les terminaux radio sont agencés pour transmettre la mesure du taux d'erreurs de bloc (ou BLER pour « Block Error Rate ») qui représente le pourcentage des blocs de données perdus (c'est-à-dire non reçus) par rapport aux blocs de données transmis par le réseau sur le canal de diffusion de la voie aller. Les terminaux radio peuvent également transmettre des indicateurs de qualité de canal radio de réception ou CQI (pour « Channel Quality Indicator »), basés par exemple sur le rapport signal à bruit (Ec/N₀), RSCP (« Received Signal Channel Power » - puissance reçue sur le canal physique alloué), RSSI (« Received Signal Strength Indicator » - intégrale de l'énergie du signal reçu sur toute la bande), ou l'atténuation du signal sur le canal (ou «pathloss »), ou le taux d'erreur bit (ou BER pour « Bit Error Rate »). On notera qu'un indicateur CQI peut aussi indiquer un schéma de modulation et d'encodage préféré par un terminal mobile (sous certaines conditions de propagation radio). Il est rappelé que les valeurs des indicateurs CQI sont utilisées par le réseau pour adapter les parties de réception et/ou de transmission des modules de communication des terminaux radio, ainsi que les chaînes de réception et/ou de transmission de son réseau d'accès radio (l'invention s'applique en particulier à l'adaptation de la chaîne de transmission du réseau d'accès radio).

Lorsque la diffusion d'un contenu se fait sur la voie aller en mode point-à-point, le terminal radio concerné peut transmettre au réseau, sur la voie retour, ses propres mesures. Il peut en effet utiliser le canal de transport (ou « bearer ») point-à-point, bidirectionnel, qui a été spécialement établi pour lui par le réseau, pour la diffusion du contenu, pour faire remonter ses mesures sous forme de données de signalisation.

Mais cette remontée de mesures n'est pas possible lorsque le terminal n'a pas de canal de transport point-à-point établi. C'est notamment le cas lorsque la diffusion d'un contenu se fait sur la voie aller en mode point-à-multipoints, du fait que le canal de transport point-à-multipoints est monodirectionnel. Or, l'utilisation d'un canal de transport point-à-multipoints pour diffuser des contenus présente de réels intérêts, notamment en terme de bande passante, dès lors que ces contenus doivent être diffusés simultanément vers plusieurs terminaux radio implantés dans au moins une cellule.

Le réseau peut certes se servir d'informations telles que les rapports d'accusé de réception et les rapports de non accusé de réception (ou « Ack/Nack ») pour adapter le(s) schéma(s) de modulation et d'encodage des données à diffuser, mais ces informations ne reflètent pas toujours les conditions radio réelles (ou effectives) dans le réseau d'accès radio. En effet, un terminal radio peut par exemple rater la réception de quelques blocs de données diffusées lorsqu'il est en train d'effectuer des mesures inter-technologies d'accès radio (ou " inter-RAT "), alors même que les conditions radio de diffusion sont bonnes.

L'invention a donc pour but d'améliorer la situation. Elle se rapporte à un dispositif de traitement et un terminal de communication radio tels que définis par les revendications.

Il est noté que les mises en oeuvre et/ou exemples de la description suivante qui ne sont pas couverts par les revendications ne sont pas considérés comme faisant partie de l'invention.

La description propose un premier dispositif de traitement, destiné à opérer pour au moins un terminal (de communication) radio capable, d'une part, de recevoir des données diffusées par un réseau (de communication) radio en mode point-à-multipoints, sur un canal physique de diffusion et selon un schéma de modulation et d'encodage adaptable, et d'autre part, de déterminer des mesures représentatives des conditions radio qui règnent dans au moins la cellule dans laquelle il est situé.

Ce premier dispositif de traitement se caractérise par le fait qu'il est destiné à être implanté dans (ou couplé à) un terminal et qu'il comprend des moyens de traitement chargés de générer un message d'état comprenant des données représentatives de la valeur d'au moins une mesure effectuée par le terminal, et d'ordonner à ce dernier de transporter ce message d'état sur un canal d'accès aléatoire autorisé (par exemple de type Random Access CHannel (ou RACH) en GSM, GPRS, UTRAN ou LTE) afin de le transmettre au réseau radio.

La longueur de la trame de bits envoyée peut être limitée afin que le message d'état puisse être décodé par le récepteur du réseau radio même s'il est émis par le terminal de façon asynchrone. Ce premier dispositif requiert l'allocation de ressources radio suffisantes au canal d'accès aléatoire autorisé afin d'éviter une congestion lorsqu'un grand nombre de terminaux transmettent en même temps un message d'état contenant au moins une mesure effectuée. Le réseau radio peut tirer avantageusement parti des procédures de capture connues permettant de distinguer différents messages lorsqu'ils sont reçus sensiblement simultanément.

Le premier dispositif peut comporter d'autres caractéristiques qui peuvent être prises séparément ou en combinaison, et notamment :
- le canal à accès aléatoire autorisé peut être dédié à la remontée des mesures. Dans ce cas, il est différent du canal à accès aléatoire qui est utilisé par un terminal pour effectuer sa demande initiale de connexion ;

- dans une variante, le canal à accès aléatoire autorisé peut être multiplexe (en temps, en fréquence ou en code) avec le canal à accès aléatoire qui est utilisé par un terminal pour effectuer sa demande initiale de connexion ;
   > ses moyens de traitement peuvent être chargés, lorsqu'un même canal à accès aléatoire est utilisé pour faire remonter des mesures et des demandes de connexion, d'intégrer dans le message qui doit être remonté par le terminal des données représentatives du type de ce message, ledit type étant choisi parmi une remontée de mesure et une demande de connexion ;
   > les moyens de traitement peuvent être chargés de déterminer si une mesure effectuée par le terminal radio correspond à un état parmi un ensemble d'états prédéfinis, et dans l'affirmative, de générer un message dédié à l'état déterminé et d'ordonner au terminal radio qu'il transmette ce message d'état, sur le canal à accès aléatoire autorisé, au réseau radio dans une portion du domaine temps/fréquence/code qui est réservée à ce message d'état, pour au moins la cellule considérée ;
      - moyens de traitement peuvent être chargés d'ordonner au terminal radio présent dans une cellule, de multiplexer le message d'état qu'il a généré dans le domaine fréquentiel dans une sous-porteuse dédiée à cet effet ;
      - en variante, les moyens de traitement peuvent être chargés d'ordonner à au terminal radio présent dans une cellule de multiplexer le message d'état qu'il a généré dans le domaine temporel dans une sous-trame qui est dédiée à l'état déterminé ;
- les mesures peuvent être par exemple des indicateurs de qualité de canal radio de réception (ou CQI) ;
   > chaque état peut par exemple être associé à un intervalle prédéfini de valeurs d'indicateur de qualité de canal radio de réception (ou équivalent). Dans ce cas, les moyens de traitement peuvent être chargés de déterminer l'intervalle de valeurs auquel appartient une mesure, afin de déterminer l'état qui correspond à cet intervalle de valeurs.

La description propose également un second dispositif de traitement qui se caractérise par le fait qu'il comprend des moyens de traitement chargés, d'une part, de déterminer si une mesure effectuée par au moins un terminal radio correspond à un état (ou " status ") parmi un ensemble d'états prédéfinis, et d'autre part, dans l'affirmative, de générer un message dédié à cet état déterminé et d'ordonner au (à chaque) terminal radio (ayant effectué cette mesure) qu'il transmette ce message d'état au réseau radio (de façon synchronisée) dans une portion du domaine temps/fréquence/code qui lui est spécifiquement réservée au sein d'une trame de signalisation, pour au moins la cellule considérée.

Il est important de noter que la portion du domaine temps/fréquence/code est ici réservée à la remontée d'un état et non pas à un unique terminal radio. Tous les terminaux radio d'une cellule, qui se trouvent placés dans un même état (à un instant donné), utilisent en effet la même portion du domaine temps/fréquence/code pour transmettre leur état commun. De fait, ce second dispositif de traitement permet de s'affranchir des problèmes de congestion lorsqu'un grand nombre de terminaux transmettent en même temps un message d'état indiquant leur état.

Le second dispositif selon la description peut comporter d'autres caractéristiques qui peuvent être prises séparément ou en combinaison, et notamment:
- ses moyens de traitement peuvent être chargés d'ordonner à au moins un terminal radio présent dans une cellule, de multiplexer le message d'état qu'ils ont généré dans le domaine fréquentiel dans une sous-porteuse dédiée à cet effet au sein de la trame de signalisation ;
- en variante, ses moyens de traitement peuvent être chargés d'ordonner à au moins un terminal radio présent dans une cellule de multiplexer le message d'état qu'ils ont généré dans le domaine temporel dans une sous-trame qui est dédiée à l'état déterminé au sein de la trame de signalisation ; - ses moyens de traitement peuvent être chargés d'ordonner à au moins un terminal radio présent dans une cellule de multiplexer le message d'état qu'ils ont généré avec un éventuel rapport de non accusé de réception (ou
   " Nack ") ou avec un éventuel rapport d'accusé de réception (ou " Ack ") ;
- les mesures peuvent être par exemple des indicateurs de qualité de canal radio de réception (ou CQI) ;
   > chaque état peut par exemple être associé à un intervalle prédéfini de valeurs d'indicateur de qualité de canal radio de réception (ou équivalent).

Dans ce cas, les moyens de traitement peuvent être chargés de déterminer l'intervalle de valeurs auquel appartient une mesure, afin de déterminer l'état qui correspond à cet intervalle de valeurs.

La description propose également un terminal de communication radio du type précité et muni d'un premier ou second dispositif de traitement du type de celui présenté ci-avant. Un tel terminal de communication radio peut comporter d'autres caractéristiques qui peuvent être prises séparément ou en combinaison, et notamment:
- il peut comprendre des moyens de multiplexage chargés de multiplexer un message d'état (généré par le second dispositif de traitement) dans le domaine fréquentiel dans une sous-porteuse qui lui est dédiée au sein d'une trame de signalisation ;
- en variante, il peut comprendre des moyens de multiplexage chargés de multiplexer un message d'état (généré par le second dispositif de traitement) dans le domaine temporel dans une sous-trame qui est dédiée à l'état déterminé (correspondant au message d'état) au sein de la trame de signalisation ;
- il peut comprendre des moyens de pré-multiplexage chargés de multiplexer le message d'état (généré par le second dispositif de traitement) avec un éventuel rapport de non accusé de réception (" Nack ") ou avec un éventuel rapport d'accusé de réception (" Ack ") ;
   > ces moyens de pré-multiplexage peuvent par exemple être chargés de multiplexer le message d'état (généré par le second dispositif de traitement) avec un éventuel rapport de non accusé de réception ou avec un éventuel rapport d'accusé de réception au moyen d'une modulation de type QPSK ;
- il peut comprendre des moyens de mesure chargés d'effectuer des mesures appelées indicateurs de qualité de canal radio de réception (ou CQI) ;
   > les mesures sont par exemple relatives au canal dit " MCH ", " DL- SCH ", " BCH " ou " SCH ", ou à tout autre canal de référence pour une ou plusieurs cellules ;
   > chaque état peut par exemple être associé à un intervalle prédéfini de valeurs d'indicateur de qualité de canal radio de réception.

La description propose également un équipement de réseau, pour un réseau de communication radio capable de diffuser des données dans des cellules, en mode point-à-multipoints sur un canal physique de diffusion et selon des schémas de modulation et d'encodage adaptables selon lesdites cellules, et comprenant des moyens de gestion chargés d'adapter les schémas en fonction de conditions effectives de diffusion radio régnant dans les cellules.

Cet équipement se caractérise par le fait que ses moyens de gestion sont chargés de procéder à une adaptation de schéma en fonction de messages qui sont représentatifs d'états prédéfinis correspondant à des mesures effectuées par des terminaux de communication radio présents dans au moins une cellule, et transmis par ces terminaux radio dans des portions du domaine temps/fréquence/code qui sont respectivement réservées aux messages représentatifs des états au sein de trames (de signalisation) sur la voie retour, pour au moins la cellule considérée.

Cet équipement de réseau peut comporter d'autres caractéristiques qui peuvent être prises séparément ou en combinaison, et notamment :
- il peut comprendre des moyens de signalisation chargés de signaler aux terminaux radio les portions du domaine temps/fréquence/code qui sont réservées aux messages d'état au sein de trames (de signalisation) sur la voie retour ;
- il peut recevoir de plusieurs terminaux radio, dans une même fenêtre de temps (restreinte), un même message d'état, sur un même canal physique de la voie retour (cela concerne plus particulièrement les réseaux dits " SFN " (pour " Single Frequency Network ") - cela est alors rendu possible en OFDM (" Orthogonal Frequency Division Multiplex ") du fait de l'insertion d'un préfixe " cyclique " au début de chaque trame) ;
- en cas de réception de messages d'état issus d'au moins une cellule disposant d'un schéma adaptable, ses moyens de gestion peuvent être chargés de déterminer le message d'état qui représente le moins bon état, puis d'adapter le schéma d'au moins cette cellule en fonction de ce moins bon état déterminé ;
- en variante, en cas de réception de messages d'état issus d'au moins une cellule disposant d'un schéma adaptable, ses moyens de gestion peuvent être chargés de déterminer le message d'état qui représente le meilleur état, puis d'adapter le schéma d'au moins cette cellule en fonction de ce meilleur état déterminé ;
- dans une autre variante, en cas de réception de messages d'état issus d'au moins une cellule disposant d'un schéma adaptable, ses moyens de gestion peuvent être chargés d'effectuer une moyenne pondérée des états que représentent ces messages d'état, puis d'adapter le schéma d'au moins cette cellule en fonction de cette moyenne pondérée ;
   > ses moyens de gestion peuvent être chargés d'effectuer la moyenne pondérée en fonction de poids prédéfinis associés à chacun des états prédéfinis ;
   > en variante, ses moyens de gestion peuvent être chargés d'effectuer la moyenne pondérée en fonction des puissances respectives des signaux qui contiennent les messages d'état, reçus par le réseau d'accès radio du réseau radio ;
- dans une autre variante, en présence de messages d'état transmis dans des trames objets d'un étalement au moyen de codes de brouillage spécifiques aux terminaux radio, et en cas de réception de messages d'état issus d'au moins une cellule disposant d'un schéma adaptable, ses moyens de gestion peuvent être chargés de déterminer la distribution au sein d'au moins cette cellule des états qui sont représentés par les messages d'état reçus, puis d'adapter le schéma d'au moins la cellule en fonction de cette distribution d'état ;
   > chaque code de brouillage utilisé par un terminal radio peut par exemple être dérivé d'un identifiant de communication du terminal radio ainsi qu'éventuellement d'un identifiant du service de diffusion des données ;
   > en variante, les codes de brouillage peuvent posséder des propriétés d'orthogonalité permettant de différencier des trames objets d'un étalement et transmises par différents terminaux radio ; - il peut faire partie d'un réseau d'accès radio du réseau de communication radio ; - il peut constituer une passerelle d'accès (ou " access gateway ") permettant l'accès à un coeur de réseau (ou " core network ") du réseau radio, ou une station de base du réseau radio, ou encore un serveur de diffusion (par exemple MBMS) du réseau radio.

D'autres caractéristiques et avantages apparaîtront à l'examen de la description détaillée ci-après, et des dessins annexés, sur lesquels :
- la figure 1 illustre de façon très schématique et fonctionnelle une partie d'un réseau de diffusion terrestre comprenant une passerelle d'accès et auquel sont connectés des terminaux mobiles équipés d'un dispositif de traitement,
- la figure 2 illustre de façon très schématique et fonctionnelle un exemple de réalisation d'un terminal mobile,
- la figure 3 illustre schématiquement un premier exemple de décomposition du domaine temps/fréquence/code incorporant une portion temps/fréquence dédiée à la transmission des états représentatifs d'indicateurs de qualité de canal radio de réception (ou CQI), dans une situation dite " synchrone sur la voie montante ", et
- la figure 4 illustre schématiquement un second exemple de décomposition du domaine temps/fréquence/code incorporant une portion temps/fréquence dédiée à la transmission des états représentatifs d'indicateurs de qualité de canal radio de réception (ou CQI), dans une situation dite " asynchrone sur la voie montante ".

L'invention a pour objet de permettre à un réseau d'accès radio d'un réseau de communication radio de connaître des conditions effectives (ou réelles) de propagation radio sur des liaisons établies entre le réseau radio et des terminaux (de communication) radio, de sorte qu'il puisse adapter le(s) schéma(s) de modulation et d'encodage des données (éventuellement de type multimédia) qui doivent être diffusées en mode point-à-multipoints vers ces terminaux radio sur un canal physique de diffusion, en fonction de ces conditions.

Dans ce qui suit, on considère à titre d'exemple non limitatif que les terminaux de communication sont des téléphones mobiles (ou cellulaires). Mais, l'invention n'est pas limitée à ce type de terminal radio. Elle concerne en effet tout équipement de communication fixe ou mobile (ou portable ou encore cellulaire) capable d'échanger des données par voie d'ondes avec un autre équipement, via un réseau d'accès radio terrestre et/ou satellitaire. Par conséquent, il pourra également s'agir de téléphones fixes, d'ordinateurs fixes ou portables, d'assistants personnels numériques (ou PDAs), d'un équipement fixe ou portable de réception radio de programmes de télévision, comme par exemple un baladeur ou un téléviseur portable, d'un équipement fixe ou portable de réception de programmes vidéos ou musicaux, ou d'un équipement radio embarqué dans un véhicule (voiture, camion, bus, train, navire, aéronef, et analogues.

Par ailleurs, on considère dans ce qui suit, à titre d'exemple non limitatif, que le réseau de communication radio est un réseau terrestre de diffusion de données, par exemple de type multimédia. Par exemple, le réseau est l'évolution appelée LTE (« Long Term Evolution ») d'un réseau cellulaire (ou mobile) de type UMTS / MBMS (Multimedia Broadcast / Multicast Services »). Mais, il pourrait également s'agir d'un réseau de type UMTS / DVB-H, adapté notamment à la diffusion de programmes de télévision mobile (ou « mobile TV »), par exemple.

On notera que l'invention n'est pas limitée aux seuls réseaux radio terrestres de diffusion de données. Elle concerne d'une manière générale tout type de réseau disposant d'un réseau d'accès radio capable de diffuser des données au moins dans des canaux de transport de type point-à-multipoints, et notamment les réseaux satellitaires, comme par exemple les réseaux SDMB (pour « Satellite Digital Multimedia Broadcast »), ou les réseaux hybrides (satellitaire et terrestre).

Comme cela est illustré sur l'unique figure, un réseau LTE de diffusion peut, d'une façon très schématique mais néanmoins suffisante à la compréhension de l'invention, être résumé à un coeur de réseau (ou « Core Network » en anglais) CN couplé à un réseau d'accès radio.

Le réseau d'accès radio d'un réseau LTE comporte principalement des équipements de réseau appelés stations de base (en anglais « enhanced Node Bs ») Ni et au moins une passerelle d'accès (ou « access gateway » en anglais) PA raccordée aux stations de base Ni.

Chaque station de base Ni est associée à au moins une cellule (logique) Ci couvrant une zone radio (ou zone de couverture) dans laquelle des terminaux de communication radio mobile (ou cellulaire) UE peuvent établir (ou poursuivre) des liaisons radio et dans laquelle cette station de base Ni peut diffuser des données, par exemple de type multimédia (telles que des programmes de télévision, notamment).

Dans l'exemple illustré, seules trois cellules (C1-C3, i = 1 à 3) ont été représentées. Mais, l'indice i peut prendre n'importe quelle valeur non nulle. Par ailleurs, dans l'exemple illustré, chaque station de base Ni est associée à une cellule Ci. Mais, une station de base peut être associée à plusieurs cellules.

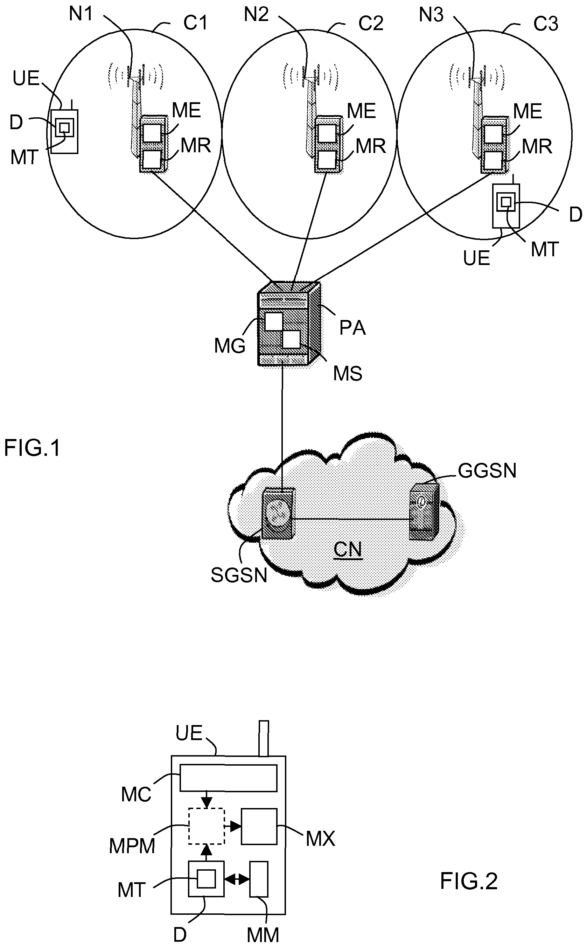

La passerelle d'accès PA est un équipement centralisé qui assure notamment l'interface entre le coeur de réseau CN et les stations de base Ni, en particulier pour leur fournir les données à diffuser. Comme cela est illustré sur la figure 1, à titre d'exemple non limitatif, la passerelle d'accès PA comprend de préférence un module de gestion MG chargé d'adapter un ou plusieurs schéma(s) de modulation et d'encodage des données de contenu qui doivent être diffusées sur un canal physique de type point-à-multipoints (dédié à un service (ici MBMS) donné). Ce(s) schéma(s) est (sont) connu(s) sous l'acronyme anglais MCS (pour « Modulation and Coding Scheme »).

On notera que ce module de gestion MG pourrait être implanté dans, ou couplé à, un autre type d'équipement de réseau qu'une passerelle d'accès, comme par exemple une station de base Ni ou un serveur de diffusion (ici de type serveur MBMS) implanté à l'interface entre le réseau d'accès radio et le coeur de réseau CN. Son implantation dans la passerelle d'accès PA est avantageuse car celle-ci est notamment en charge de la gestion centralisée de la modulation et de l'encodage des données au sein du réseau d'accès radio.

Le coeur de réseau CN comprend des équipements de réseau qui pour certains sont raccordés notamment à la passerelle d'accès PA. Parmi ces équipements il existe au moins un noeud qui assure la connexion du coeur de réseau CN à un réseau de service(s), par exemple de type IP, qui matérialise les services qui sont mis à la disposition des utilisateurs des terminaux mobiles UE par l'opérateur du réseau radio, et notamment les services de diffusion de données.

Chaque station de base Ni comprend un module d'émission ME et un module de réception MR.

Le module d'émission ME reçoit les données à diffuser selon un schéma de modulation et d'encodage choisi et les intègre dans des trames de données qu'elle diffuse, sous forme de signaux radio au moyen d'une porteuse dédiée, sur une voie aller (ou « downlink ») dédiée principalement à la diffusion. On ne considèrera ci-après que la diffusion de contenus dans un canal physique de type point-à-multipoints, mais, le réseau peut être également agencé pour diffuser des contenus dans des canaux physiques de type point-à-point.

Le module de réception MR est chargé de recevoir les trames de données transmises par les terminaux mobiles UE sur une voie retour (ou « uplink »), et notamment les données de signalisation (comme par exemple les rapports d'accusé de réception (« Ack ») ou les rapports de non accusé de réception (« Nack »), et de les communiquer si nécessaire à la passerelle d'accès PA.

Par exemple, les voies aller et retour de diffusion correspondent respectivement à des première et seconde bandes de fréquences distinctes (dans le cas du mode de transmission FDD (pour « Frequency Division Dupleix »)) ou bien à des tranches ou ensembles de tranches temporelles distinct(e)s (par exemple dans le cas du mode de transmission TDD (« Time Division Dupleix ») qui consiste à utiliser une unique porteuse découpée en tranches temporelles attribuées sélectivement aux voies aller et retour).

Les terminaux mobiles UE sont agencés de manière à recevoir les trames de données qui sont diffusées sur un canal physique de type point-à-multipoints par le réseau d'accès radio (stations de base Ni) sur la voie aller, et à transmettre au réseau d'accès radio (stations de base Ni) des trames de signalisation sur la voie retour (par exemple dans des canaux de contrôle de type HS-DPCCH). Dans certaines conditions qui seront évoquées plus loin, les terminaux (mobiles) UE d'une ou plusieurs cellules peuvent par exemple transmettre ces trames de signalisation simultanément sur le même canal physique (ce qui permet d'optimiser le spectre radio puisqu'une multiplicité de terminaux (mobiles) UE utilisent alors la même voie retour simultanément). Chaque terminal (mobile) UE comprend également un module de mesure MM chargé d'obtenir des informations de paging et d'effectuer des mesures radio relatives aux conditions de réception radio dans sa cellule de rattachement et/ou dans d'autres cellules voisines et/ou auprès d'autres technologies d'accès radio que celle utilisée par le service de diffusion.

Afin de permettre aux terminaux (mobiles) UE, qui utilisent un même service de diffusion de contenus (ici MBMS) en mode point-à-multipoints (via un canal physique) dans au moins une cellule Ci du réseau radio, de faire remonter vers le réseau d'accès radio certaines au moins des mesures qu'ils ont effectuées avec leur module de mesure MM, l'invention propose d'utiliser au moins un premier ou second dispositif de traitement D.

Dans l'exemple illustré sur la figure 1, chaque (terminal) mobile UE est équipé de son propre premier ou second dispositif de traitement D. Mais, dans une variante on peut envisager qu'un second dispositif de traitement D, implanté dans le réseau d'accès radio, agisse pour plusieurs terminaux (mobiles) UE, de façon centralisée.

Un premier ou second dispositif de traitement D comprend un module de traitement MT qui est au moins chargé de générer des messages d'état comportant des données au moins représentatives de certaines au moins des mesures qui ont été effectuées par au moins un terminal (mobile) UE, et d'ordonner à ce dernier de faire remonter ces messages d'état vers le réseau radio (et plus précisément à la station de base Ni qui contrôle la cellule Ci dans laquelle il est (momentanément) situé.

Dans ce qui suit, on considère que les mesures, qui sont effectuées par le module de mesure MM d'un terminal mobile UE, sont des indicateurs de qualité de canal radio de réception (ou CQI (pour « Channel Quality Indicator »)). Parmi ces indicateurs, on peut notamment citer le rapport signal à bruit (Ec/N₀), RSCP (« Received Signal Channel Power » - puissance reçue sur le canal physique alloué), RSSI (« Received Signal Strength Indicator » - intégrale de l'énergie du signal reçu sur toute la bande), un schéma de modulation et d'encodage (MCS) préféré, et le taux d'erreur bit (BER).

Ces mesures sont par exemple relatives au canal de trafic de la voie aller dit « MCH » (pour « MBMS CHannel ») ou dit « DL-SCH » (pour « DownLink-Shared CHannel »), ou dit « BCH » (« Broadcast CHannel ») ou encore dit « SCH » (« Shared CHannel »). Mais, les mesures peuvent être relatives à tout autre canal de référence pour une cellule ou un groupe de cellules.

On notera que le module de traitement MT peut être également chargé de déterminer si une mesure qui a été effectuée par un terminal (mobile) UE correspond à un état (ou « status ») parmi un ensemble d'états prédéfinis.

Chaque état est par exemple associé à un intervalle prédéfini de valeurs d'indicateur de qualité de canal radio de réception (ou équivalent), comme indiqué ci-après :
- l'état E1 correspond aux valeurs de CQI comprises entre CQI1 et CQI2 (CQI1 ≤ CQI < CQI2),
- l'état E2 correspond aux valeurs de CQI comprises entre CQI2 et CQI3 (CQI2 ≤ CQI < CQI3),
- l'état E3 correspond aux valeurs de CQI comprises entre CQI3 et CQI4 (CQI3 ≤ CQI < CQI4), ...
- et l'état EN correspond aux valeurs de CQI comprises entre CQIN et CQIN+1 (CQIN ≤ CQI < CQIN+1).

En présence de cette prédéfinition des N états (avec N ≥ 2), lorsque le module de traitement MT reçoit une mesure (ici un CQI), il détermine parmi les différents intervalles de valeurs prédéfinis celui auquel elle appartient, afin de déterminer l'état qui correspond à cet intervalle de valeurs.

Les prédéfinitions des N états et des occurrences des portions de temps et/ou de fréquences et/ou de codes pour faire remonter ces N états sont transmises aux terminaux mobiles UE par les stations de base Ni au moyen de messages de service ou de contrôle. On notera que ces stations de base Ni reçoivent elles-mêmes ces prédéfinitions des N états de l'équipement de réseau qui comprend le module de gestion MG (ici la passerelle d'accès PA).

Chaque fois que le module de traitement MT s'aperçoit qu'une mesure correspond à l'un des états prédéfinis, éventuellement lors d'analyses périodiques (selon un intervalle de temps qui peut être défini par le réseau), ou bien à la demande du réseau d'accès, ou encore lors de l'occurrence d'un événement qui peut être défini par le réseau, il génère un message d'état qui est spécifiquement dédié à cet état, puis il ordonne au terminal mobile UE qui a effectué cette mesure (ou à l'ensemble des terminaux mobiles UE pour lesquels il agit et qui ont effectué cette sensiblement même mesure) de transmette ce message d'état au réseau radio, et plus précisément à la station de base Ni qui contrôle la cellule Ci dans laquelle il(s) est (sont) (momentanément) situé(s). Cette transmission du message d'état se fait dans une portion du domaine temps/fréquence/code qui est spécifiquement réservée à cet état au sein d'une trame de signalisation, pour au moins la cellule Ci dans laquelle est situé le terminal mobile UE considéré.

En d'autres termes, dans une cellule Ci (ici MBMS) tous les terminaux (mobiles) UE qui ont déterminé une mesure correspondant à un même état transmettent un même message d'état dans une même portion temps/fréquence/code. Cela est possible, lorsque l'on se trouve dans une situation appelée ici « synchrone sur la voie montante », dans laquelle tous les terminaux (mobiles) UE sont synchronisés en émission par rapport à une référence temporelle. Cette situation peut être mise en oeuvre en présence d'un second dispositif de traitement D. On notera qu'un second dispositif de traitement D peut agir pour plusieurs terminaux (mobiles) UE. Dans ce cas, il peut être chargé de la synchronisation des terminaux mobiles UE (par exemple en leur transmettant régulièrement la référence temporelle en cours). Lorsque l'on utilise un second dispositif de traitement D pour chaque terminal (mobile) UE, tous les seconds dispositifs D doivent être synchronisés par rapport au réseau d'accès (et éventuellement les uns par rapport aux autres), par exemple au moyen d'une transmission régulière par le réseau de la référence temporelle en cours, et chaque second dispositif D est chargé de la synchronisation de l'émission de son terminal mobile UE par rapport à la référence temporelle.

On peut également se trouver dans une situation où les terminaux (mobiles) UE ne sont pas synchronisés en émission par rapport à une référence temporelle. Cette situation est ici appelée « asynchrone sur la voie montante ». Cette situation nécessite que les messages d'état soient générés par un premier dispositif D et envoyés par son terminal (mobile) UE vers le réseau radio sur un canal à accès aléatoire autorisé (par exemple de type RACH (pour « Random Access CHannel »).

Ce canal à accès aléatoire autorisé peut par exemple être dédié à la remonté d'états des mesures. Il est alors différent du canal à accès aléatoire qui est utilisé par le terminal (mobile) UE pour effectuer ses demandes initiales de connexion. Dans ce cas, le message d'état comprend des données agencées sous la forme d'une trame de bits qui représente au moins une mesure effectuée par le terminal mobile UE.

Dans une variante, le module de traitement MT peut ordonner à son premier dispositif D de multiplexer (en temps, en fréquence ou en code) le canal à accès aléatoire servant au transport des messages d'état (contenant chacun des données représentatives d'un état de mesure) avec une demande initiale de connexion.

Dans ce cas, c'est-à-dire lorsqu'un même canal à accès aléatoire est utilisé pour les remontées de mesure(s) et de demande(s) de connexion, le module de traitement MT peut intégrer dans le message (d'état ou de demande de connexion), qui doit être remonté par le terminal (mobile) UE, des données représentatives du type de ce message. Un type désigne ici soit une remontée de mesure, soit une demande de connexion (par exemple pour effectuer un transfert de données). Ces données (ou bits) indiquent ainsi au réseau la cause de l'envoi du message sur le canal à accès aléatoire.

On notera qu'un terminal UE passe souvent de la situation synchrone à la situation asynchrone puisqu'avant l'établissement d'une première connexion, sa fenêtre d'émission n'est pas synchronisée par rapport au réseau. Lorsqu'une connexion est établie, l'avance temporelle de sa fenêtre d'émission est régulée par le réseau ce qui permet au terminal UE de rester en situation synchrone. Après un certain temps d'inactivité, le réseau cesse de réguler l'avance temporelle, et le terminal UE entre à nouveau en situation asynchrone. Cette alternance de situations asynchrone et synchrone justifie qu'il faille prévoir une procédure pour chacune d'elle. On comprendra donc qu'un dispositif D selon l'invention peut éventuellement se comporter comme un premier dispositif ou comme un second dispositif en fonction des besoins. Mais, il peut également être agencé pour définir uniquement un premier dispositif ou uniquement un second dispositif.

Par exemple, la passerelle d'accès PA comprend un module de signalisation MS chargé de signaler aux terminaux mobiles UE quelles sont les portions du domaine temps/fréquence/code qui sont réservées aux messages d'état au sein des trames de signalisation sur la voie retour. Cette signalisation peut par exemple se faire sur le canal de contrôle dit « MCCH » (pour « MBMS Control CHannel » - dans le cas d'un service de diffusion MBMS) ou « BCCH » (pour « Broadcast Control CHannel » - dans le cas général). Les portions temps/fréquence/code réservées aux messages d'état sont prédéfinies par le plan de contrôle (ici MBMS).

On entend ici par « portion du domaine temps/fréquence/code » soit une portion temporelle (ou « time slot »), soit une portion fréquentielle (ou bande de fréquences), soit encore un code spécifique.

Lorsque l'on réserve des portions temporelles, à chaque message d'état correspond une sous-trame d'une trame de signalisation de la voie retour (ou montante). Dans ce cas, lorsqu'un module de traitement MT a généré un message d'état, il ordonne au terminal mobile UE concerné de multiplexer ce message d'état dans le domaine temporel dans la sous-trame qui est dédiée à cet état au sein d'une trame de signalisation. Comme illustré sur la figure 2, ce multiplexage en temps est assuré par le terminal (mobile) UE au moyen d'un module de multiplexage MX.

Lorsque l'on réserve des portions fréquentielles, à chaque message d'état correspond une sous-porteuse d'une trame de signalisation de la voie retour (ou montante). Dans ce cas, lorsqu'un module de traitement MT a généré un message d'état, il ordonne au terminal mobile UE concerné de multiplexer ce message d'état dans le domaine fréquentiel dans la sous-porteuse qui est dédiée à cet état au sein d'une trame de signalisation. Comme illustré sur la figure 2, ce multiplexage en fréquence est assuré par le terminal (mobile) UE au moyen d'un module de multiplexage MX.

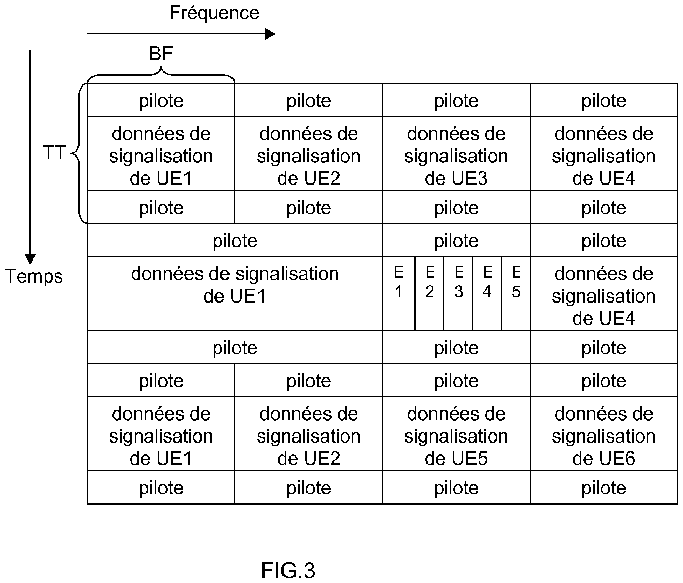

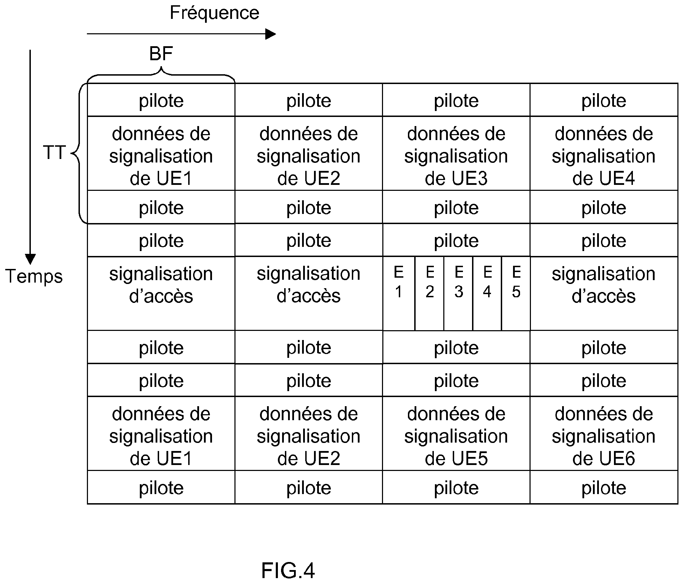

Ce second cas est illustré schématiquement sur la figure 3 dans la situation synchrone sur la voie montante et sur la figure 4 dans la situation asynchrone sur la voie montante. Plus précisément, le domaine temps/fréquence/code (ici simplement le domaine temps/fréquence) est décomposé suivant l'axe du temps et l'axe des fréquences. A chaque unité élémentaire de ressources radio (ou « resource unit ») d'une cellule Ci correspond une bande de fréquences BF utilisée par au moins un terminal mobile UE pour transmettre une trame de signalisation sur la voie retour.

Chaque trame de signalisation est subdivisée en sous-trames TT, constituées chacune d'une portion dédiée à la transmission des données de signalisation (et de contrôle) et encadrée par deux pilotes. Il est rappelé qu'un pilote est une séquence de bits d'apprentissage utilisé par le récepteur (ici le réseau radio) pour détecter un canal (par le biais de sa distorsion).

Dans l'exemple illustré sur la figure 3, l'unité élémentaire de ressources radio la plus à gauche sert exclusivement à un premier terminal mobile UE1, l'unité élémentaire de ressources radio suivante sert alternativement à un deuxième terminal mobile UE2 et au premier terminal mobile UE1, l'unité élémentaire de ressources radio suivante sert alternativement à un troisième terminal mobile UE3, à la transmission des états déterminés, et à un cinquième terminal mobile UE5, et l'unité élémentaire de ressources radio suivante (la plus à droite) sert à un quatrième terminal mobile UE4 et à un sixième terminal mobile UE6.

Dans cet exemple, cinq états E1 à E5 (N=5) ont été prédéfinis. Par conséquent, la deuxième sous-trame TT, de la trame de signalisation associée à la troisième unité élémentaire de ressources radio, est subdivisée en cinq sous-porteuses associées respectivement aux cinq états E1 à E5.

Dans la situation synchrone sur la voie montante, afin que les stations de base Ni puissent décoder les messages d'état transmis, tous les terminaux (mobiles) UE dans un même état peuvent utiliser le même pilote ou préambule (par exemple en OFDM ou en LTE). L'utilisation d'un même pilote (ou préambule) est moins onéreuse dans la mise en oeuvre et dans la gestion des ressources radio. L'utilisation de plusieurs pilotes (ou préambules) (par exemple un par terminal UE) nécessite que le réseau d'accès détecte également plusieurs pilotes (ou préambules).

Ce qui différencie l'exemple illustré sur la figure 4 de celui illustré sur la figure 3, c'est essentiellement le fait que les messages d'état sont transportés sur un canal à accès aléatoire qui est multiplexé en temps (mais cela pourrait être également en fréquence ou en code) avec le canal à accès aléatoire qui est utilisé par le terminal (mobile) UE pour effectuer une demande de connexion (au moyen de la « signalisation d'accès »). Par conséquent, hormis cette différence essentielle, tout ce qui a été dit ci-avant en référence à la figure 3 s'applique à la figure 4.

Dans la situation asynchrone sur la voie montante, afin que les stations de base Ni puissent décoder les messages d'état transmis, tous les terminaux (mobiles) UE dans un même état peuvent utiliser le même pilote (ou préambule). Le récepteur du réseau d'accès pourra avantageusement tirer parti des méthodes connus de capture sur les canaux d'accès aléatoire, comme par exemple le RACH (en GSM, GPRS, UMTS, ou LTE).

On notera que dans le cas d'un réseau radio de type CDMA, on associe chaque état prédéfini à un code particulier. D'une manière générale, on peut partager le spectre en ressources élémentaires selon les trois dimensions (temps, fréquence, code), ce qui correspond respectivement aux réseaux de types TDMA, FDMA et CDMA, et on associe à chaque état une occurrence de ces ressources élémentaires.

Par ailleurs, on notera que dans la mesure où la transmission des états se fait à des instants prédéfinis (de façon périodique dans la situation synchrone sur la voie montante), le module de traitement MT n'analyse pas forcément chaque mesure délivrée par le module de mesure MM d'un terminal (mobile) UE. Par conséquent, le module de traitement MT peut éventuellement assurer une fonction de filtrage des mesures de manière à obtenir une moyenne temporelle (par exemple un filtre peut accorder plus de poids dans cette moyenne aux dernières valeurs mesurées).

On notera également qu'un terminal (mobile) UE n'est pas obligé de transmettre systématiquement son message d'état dans chaque portion temps/fréquence/code réservée à cet effet. Cependant, dans chaque portion temps/fréquence/code réservée à la transmission de message(s) d'état un terminal (mobile) UE ne peut transmettre qu'un seul message d'état.

Comme cela est schématiquement illustré sur la figure 2, un terminal (mobile) UE selon l'invention peut éventuellement comporter un module de pré-multiplexage MPM chargé de multiplexer, lorsque cela est possible, le message d'état qui a été généré par le dispositif de traitement MT d'un second dispositif D avec un éventuel rapport de non accusé de réception (ou « Nack ») ou avec un éventuel rapport d'accusé de réception (ou « Ack ») qui doit être transmis au réseau radio, avant qu'il ne soit multiplexé en fréquence ou en temps par le module de multiplexage MX. Il est rappelé qu'un terminal (mobile) UE transmet au réseau radio un rapport de type Nack lorsqu'il n'a pas reçu un bloc de données.

Le module de pré-multiplexage MPM reçoit les rapports de type Nack ou Ack du module de contrôle MC du terminal (mobile) UE.

Par exemple, le module de pré-multiplexage MPM multiplexe un message d'état généré par le second dispositif de traitement D avec un rapport de type Nack ou Ack au moyen d'une modulation de type QPSK. Il est alors agencé sous la forme d'un modulateur QPSK comprenant deux voies d'entrée, appelées I (pour « In-phase » - en phase) et Q (pour « Quadrature » - en quadrature) et recevant respectivement les messages d'état et les rapports de type Nack ou Ack. Par exemple, la voie I reçoit les messages d'état tandis que la voie Q reçoit les rapports de type Nack ou Ack. Mais, l'inverse est également possible.

Un terminal (mobile) UE selon l'invention peut éventuellement étaler les trames de signalisation qui contiennent les messages d'état au moyen d'un code de brouillage (ou « scrambling code ») qui lui est propre. Chaque code de brouillage utilisé par un terminal (mobile) UE peut par exemple être dérivé d'un identifiant de communication de ce terminal radio (par exemple l'IMSI) ainsi qu'éventuellement d'un identifiant du service de diffusion des données.

En variante, les codes de brouillage utilisés par différents terminaux (mobiles) UE peuvent posséder des propriétés d'orthogonalité qui permettent de différencier les trames de signalisation étalées (par brouillage) qu'ils transmettent respectivement.

Lorsqu'une station de base Ni reçoit une trame de signalisation contenant un ou plusieurs messages d'état, elle extrait chaque message d'état afin de le transmettre au module de gestion MG, ici implanté dans la passerelle d'accès PA.

Notamment, lorsque la transmission s'effectue en OFDM sur un même canal physique (situation synchrone sur la voie montante), la station de base Ni peut recevoir de plusieurs terminaux (mobiles) UE, si ceux-ci émettent à l'intérieur d'une même fenêtre de temps, de préférence de largeur restreinte, un même message d'état. Ce principe s'applique aux réseaux radio du type dit « SFN » (pour « Single Frequency Network »). Il est rappelé que les réseaux SFN utilisent une même porteuse sur plusieurs émetteurs, avec une synchronisation très fine entre ces émetteurs afin de permettre au récepteur de combiner les trames.

Le module de gestion MG est chargé de procéder à une adaptation de schéma de modulation et d'encodage des données à diffuser en mode point-à-multipoints sur un canal physique de la voie aller, en fonction des messages d'état reçus. Grâce à l'invention, cette adaptation se fait désormais en fonction des conditions effectives (ou réelles) de propagation radio sur les liaisons établies entre le réseau radio et des terminaux (mobiles) UE (destinataires des données à diffuser).

Il est rappelé que l'adaptation de schéma(s) sert à adapter les parties de réception et/ou de transmission du module de communication des terminaux (mobiles) UE, ainsi qu'éventuellement les chaînes de réception et/ou de transmission du réseau d'accès radio.

Les états désignés par les messages d'état reçus peuvent être utilisés de différentes manières. Par exemple, le module de gestion MG peut déterminer parmi les états reçus celui qui est le meilleur (respectivement le pire), puis il adapte l'un au moins des schémas de modulation et d'encodage de données (dont il a la charge) en fonction de ce meilleur (respectivement de ce plus mauvais) état. On notera qu'un seul schéma de modulation et d'encodage (MCS) peut être adapté à un instant donné pour une cellule donnée et pour un canal physique donné.

Dans une variante, le module de gestion MG peut déterminer la valeur moyenne des états désignés par les messages d'état reçus, puis il adapte l'un au moins des schémas de modulation et d'encodage de données (dont il a la charge) en fonction de cette valeur moyenne. On notera que le module de gestion MG peut éventuellement commencer par pondérer chaque état désigné par un message d'état reçu, afin de déterminer la moyenne pondérée de ces états. Puis, il adapte l'un au moins des schémas de modulation et d'encodage de données (dont il a la charge) en fonction de cette moyenne pondérée.

La pondération peut par exemple se faire en fonction de poids prédéfinis associés à chacun des états prédéfinis. En variante, la pondération peut se faire en fonction d'au moins un paramètre radio, comme par exemple les puissances respectives des signaux contenant les messages d'état, reçus par le réseau d'accès radio.

Dans une autre variante, qui concerne le cas où les messages d'état sont transmis dans des trames étalées au moyen de codes de brouillage spécifiques aux terminaux (mobiles) UE, le module de gestion MG peut commencer par déterminer la distribution au sein de la cellule (au moins), d'où sont issus les messages d'état, des états qui sont représentés par les messages d'état reçus. Puis, il adapte l'un au moins des schémas de modulation et d'encodage de données (dont il a la charge) en fonction de cette distribution d'états.

De même, lorsque des préambules différents sont utilisés par les terminaux UE (situation asynchrone sur la voie montante), les messages d'état envoyés par ces terminaux UE peuvent être décodés distinctement, même s'ils sont émis au même moment sur les mêmes porteuses, et le module de gestion MG peut commencer par déterminer la distribution au sein de la cellule (au moins), d'où sont issus les messages d'état, des états qui sont représentés par les messages d'état reçus. Puis, il adapte l'un au moins des schémas de modulation et d'encodage de données (dont il a la charge) en fonction de cette distribution d'états.

Lorsque le même préambule est utilisé par les terminaux UE sur un canal d'accès aléatoire (situation asynchrone sur la voie montante), l'écart temporel à la réception des messages d'état envoyés par les terminaux UE permet de décoder et de distinguer les différents messages d'état. Ainsi, le module de gestion MG peut commencer par déterminer la distribution au sein de la cellule (au moins), d'où sont issus les messages d'état, des états qui sont représentés par les messages d'état reçus. Puis, il adapte l'un au moins des schémas de modulation et d'encodage de données (dont il a la charge) en fonction de cette distribution d'états. Sur un canal d'accès aléatoire, le réseau pourra tirer avantageusement parti d'une méthode de capture connue afin de distinguer les différents messages d'état transmis.

Dans encore une autre variante, qui concerne le cas où les messages d'état sont transmis dans des trames étalées au moyen de codes de brouillage possédant des propriétés d'orthogonalité, la station de base Ni détecte et différencie les signaux reçus (qui contiennent des messages d'état) du fait des propriétés d'orthogonalité de leurs codes de brouillage respectifs. Puis, il extrait les messages d'état afin de les transmettre au module de gestion MG. Ce dernier détermine alors la distribution au sein de la cellule (au moins), d'où sont issus les messages d'état, des états qui sont représentés par les messages d'état reçus. Puis, il adapte l'un au moins des schémas de modulation et d'encodage de données (dont il a la charge) en fonction de cette distribution d'états.

Le premier ou second dispositif de traitement D selon l'invention, et notamment son module de traitement MT, le module de gestion MG, le module de signalisation MS, le module de multiplexage MX et l'éventuel module de pré-multiplexage MPM peuvent être réalisés sous la forme de circuits électroniques, de modules logiciels (ou informatiques), ou d'une combinaison de circuits et de logiciels.

Dans les exemples de réalisation précédemment décrits le réseau d'accès radio du réseau de diffusion est purement terrestre. Mais, l'invention s'applique également aux réseaux purement satellitaires, ainsi qu'aux réseaux hybrides comportant un réseau d'accès radio satellitaire et un réseau d'accès radio terrestre, l'un au moins d'entre eux étant adapté à la diffusion de données au moins en mode point-à-multipoints. On peut ainsi envisager que la voie aller de diffusion soit purement satellitaire (par exemple de type DVB-H adapté au satellite), alors que la voie retour est purement terrestre (par exemple de type UMTS), ou l'inverse.

L'invention ne se limite pas aux modes de réalisation de premier ou second dispositif de traitement, de terminal de communication radio décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de réalisation dans lequel chaque terminal radio dispose de son propre premier ou second dispositif de traitement. Mais, l'invention s'applique également au cas où un dispositif de traitement agit pour plusieurs terminaux radio.

## Revendications

1. Dispositif de traitement (D) pour au moins un terminal de communication radio (UE) propre, d'une part, à recevoir des données diffusées par un réseau de communication radio en mode point-à-multipoints sur un canal physique de diffusion et selon un schéma de modulation et d'encodage adaptable, et d'autre part, à déterminer des mesures représentatives des conditions radio régnant dans au moins la cellule dans laquelle il est situé, lesdites mesures étant des indicateurs de qualité de canal radio de réception, comprenant des moyens de traitement (MT) agencés pour déterminer un intervalle de valeurs auquel appartient une mesure afin de déterminer un état correspondant à cet intervalle de valeurs parmi des états prédéfinis associé chacun à un intervalle prédéfini de qualité de canal radio de réception, générer un message d'état dédié à l'état déterminé, et ordonner audit terminal radio (UE) de transmettre ce message d'état, comprenant des données représentatives de la valeur d'au moins une mesure correspondante effectuée par ledit terminal radio, audit réseau radio sur une portion du domaine temps/fréquence/code du canal d'accès aléatoire dédiée à l'état déterminé, pour au moins ladite cellule considérée.

2. Dispositif selon la revendication 1, **caractérisé en ce que** ledit canal à accès aléatoire autorisé est dédié à la remontée de messages d'état vers ledit réseau radio, et diffère du canal à accès aléatoire utilisé par ledit terminal radio (UE) pour effectuer une demande initiale de connexion.

3. Dispositif selon la revendication 1, **caractérisé en ce que** lesdits moyens de traitement (MT) sont agencés pour ordonner audit terminal radio (UE) présent dans une cellule de multiplexer le canal à accès aléatoire autorisé, en temps ou en fréquence ou en code, avec un canal à accès aléatoire utilisé par ledit terminal radio (UE) pour effectuer une demande initiale de connexion.

4. Dispositif selon la revendication 3, **caractérisé en ce que** lesdits moyens de traitement (MT) sont agencés, lorsqu'un même canal à accès aléatoire est utilisé pour faire remonter de messages d'état et des demandes de connexion, pour intégrer dans le message d'état ou de demande de connexion, devant être remonté par le terminal (UE), des données représentatives du type dudit message, ledit type étant choisi parmi un message d'état et une demande de connexion.

5. Dispositif selon la revendication 1, **caractérisé en ce que** lesdits moyens de traitement (MT) sont agencés pour ordonner à au moins un terminal radio (UE) présent dans une cellule, de multiplexer ledit message d'état généré dans le domaine fréquentiel dans une sous-porteuse dédiée.

6. Dispositif selon la revendication 1, **caractérisé en ce que** lesdits moyens de traitement (MT) sont agencés pour ordonner à au moins un terminal radio (UE) présent dans une cellule de multiplexer ledit message d'état généré dans le domaine temporel dans une sous-trame, dédiée audit état déterminé.

7. Terminal de communication radio (UE), destiné, d'une part, à recevoir des données diffusées par un réseau de communication radio en mode point-à- multipoints sur un canal physique de diffusion et selon un schéma de modulation et d'encodage adaptable, et d'autre part, à déterminer des mesures représentatives des conditions radio régnant dans au moins la cellule dans laquelle il est situé, comprenant un dispositif de traitement (D) selon l'une des revendications 1 à 6.

8. Terminal selon la revendication 7, **caractérisé en ce qu'**il comprend des moyens de multiplexage (MM) agencés pour multiplexer ledit message d'état généré dans le domaine fréquentiel dans une sous-porteuse dédiée au sein de ladite trame de signalisation.

9. Terminal selon la revendication 7, **caractérisé en ce qu'**il comprend des moyens de multiplexage (MM) agencés pour multiplexer ledit message d'état généré dans le domaine temporel dans une sous-trame, dédiée audit état déterminé, au sein de ladite trame de signalisation.

10. Terminal selon l'une des revendications 7 à 9, **caractérisé en ce qu'**il comprend des moyens de pré-multiplexage (MPM) agencés pour multiplexer ledit message d'état avec un éventuel rapport de non accusé de réception ou avec un éventuel rapport d'accusé de réception.

11. Terminal selon la revendication 10, **caractérisé en ce que** lesdits moyens de pré-multiplexage (MPM) sont agencés pour multiplexer ledit message d'état généré avec un éventuel rapport de non accusé de réception ou avec un éventuel rapport d'accusé de réception au moyen d'une modulation de type QPSK.

12. Terminal selon l'une des revendications 7 à 11, **caractérisé en ce qu'**il comprend des moyens de mesure (MM) agencés pour effectuer des mesures appelées indicateurs de qualité de canal radio de réception.

13. Terminal selon la revendication 12, **caractérisé en ce que** lesdites mesures sont relatives à un canal choisi dans un groupe comprenant au moins " MCH ", " DL-SCH "," BCH " et " SCH".

## Patentansprüche

1. Verarbeitungsvorrichtung (D) für mindestens ein Funkkommunikations-Terminal (UE), das dafür eingerichtet ist, einerseits Daten zu empfangen, die durch ein Funkkommunikationsnetz im Punkt-zu-Mehrpunkt-Modus auf einem physikalischen Übertragungskanal und gemäß einem anpassbaren Modulations- und Codierschema übertragen werden, und andererseits Maße zu bestimmen, die repräsentativ für die Funkbedingungen sind, die zumindest in der Zelle herrschen, in der es sich befindet, wobei die Maße Empfangsfunkkanalqualitäts-Indikatoren sind, die Folgendes aufweist: Verarbeitungseinrichtungen (MT), die dafür ausgelegt sind, ein Werteintervall zu bestimmen, zu dem ein Maß gehört, um unter vorbestimmten Zuständen einen diesem Werteintervall entsprechenden Zustand zu bestimmen, der jeweils einem vordefinierten Intervall der Empfangsfunkkanalqualität zugeordnet ist, eine Zustandsnachricht zu generieren, die spezifisch für den bestimmten Zustand ist, und dem Funkendgerät (UE) zu befehlen, diese Zustandsnachricht, die Daten umfasst, die repräsentativ für den Wert von mindestens einem entsprechenden Maß sind, das von dem Funkterminal ermittelt worden ist, auf einem Bereich der Zeit-/Frequenz-/Code-Domäne des Zufallszugriffskanals, der spezifisch für den bestimmten Zustand ist, für zumindest die betreffende Zelle an das Funknetz zu übermitteln.

2. Vorrichtung nach Anspruch 1,
**dadurch gekennzeichnet,**
**dass** der autorisierte Zufallszugriffskanal für das Aussenden von Zustandsnachrichten an das Funknetz bestimmt ist und sich von dem Zufallszugriffskanal unterscheidet, der von dem Funkterminal (UE) zur Durchführung einer anfänglichen Verbindungsanfrage verwendet wird.

3. Vorrichtung nach Anspruch 1,
**dadurch gekennzeichnet,**
**dass** die Verarbeitungseinrichtungen (MT) dafür ausgelegt sind, dem in einer Zelle befindlichen Funkterminal (UE) zu befehlen, den autorisierten Zufallszugriffskanal mit einem Zufallszugriffskanal, der von dem Funkterminal (UE) zur Durchführung einer anfänglichen Verbindungsanfrage verwendet wird, zeitlich oder frequenzmäßig oder codemäßig zu multiplexen.

4. Vorrichtung nach Anspruch 3,
**dadurch gekennzeichnet,**
**dass** die Verarbeitungseinrichtungen (MT) dafür ausgelegt sind, wenn der gleiche Zufallszugriffskanal zum Aussenden von Zustandsnachrichten und von Verbindungsanfragen verwendet wird, in die durch das Terminal (UE) auszusendende Zustandsnachricht oder Verbindungsanfrage Daten zu integrieren, die repräsentativ für den Typ der Nachricht sind, wobei der Typ unter einer Zustandsnachricht und einer Verbindungsanfrage ausgewählt wird.

5. Vorrichtung nach Anspruch 1,
**dadurch gekennzeichnet,**
**dass** die Verarbeitungseinrichtungen (MT) dafür ausgelegt sind, mindestens einem in einer Zelle befindlichen Funkterminal (UE) zu befehlen, die generierte Zustandsnachricht in der Frequenzdomäne in einem spezifischen Zwischenträger zu multiplexen.

6. Vorrichtung nach Anspruch 1,
**dadurch gekennzeichnet,**
**dass** die Verarbeitungseinrichtungen (MT) dafür ausgelegt sind, mindestens einem in einer Zelle befindlichen Funkterminal (UE) zu befehlen, die generierte Zustandsnachricht in der Zeitdomäne in einem Unterrahmen zu multiplexen, der für den bestimmten Zustand spezifisch ist.

7. Funkkommunikations-Terminal (UE), das dazu bestimmt ist, einerseits Daten zu empfangen, die durch ein Funkkommunikationsnetz im Punkt-zu-Mehrpunkt-Modus auf einem physikalischen Übertragungskanal und gemäß einem anpassbaren Modulations- und Codicrschcma übertragen werden, und andererseits Maße zu bestimmen, die repräsentativ für die Funkbedingungen sind, die zumindest in der Zelle herrschen, in der es sich befindet, das eine Verarbeitungsvorrichtung (D) nach einem der Ansprüche 1 bis 6 aufweist.

8. Terminal nach Anspruch 7,
**dadurch gekennzeichnet,**
**dass** es Multiplexeinrichtungen (MM) umfasst, die dafür ausgelegt sind, die generierte Zustandsnachricht in der Frequenzdomäne in einem spezifischen Zwischenträger innerhalb des Signalisierungsrahmens zu multiplexen.

9. Terminal nach Anspruch 7,
**dadurch gekennzeichnet,**
**dass** es Multiplexeinrichtungen (MM) umfasst, die dafür ausgelegt sind, die generierte Zustandsnachricht in der Zeitdomäne in einem Unterrahmen, der für den bestimmten Zustand spezifisch ist, innerhalb des Signalisierungsrahmens zu multiplexen.

10. Terminal nach einem der Ansprüche 7 bis 9,
**dadurch gekennzeichnet,**
**dass** es Vormultiplexeinrichtungen (MPM) umfasst, die dafür ausgelegt sind, die Zustandsnachricht mit einem eventuellen Nichtempfangs-Bestätigungsbericht oder mit einem eventuellen Empfangs-Bestätigungsbericht zu multiplexen.

11. Terminal nach Anspruch 10,
**dadurch gekennzeichnet,**
**dass** die Vormultiplexeinrichtungen (MPM) dafür ausgelegt sind, die generierte Zustandsnachricht mit einem eventuellen Nichtempfangs-Bestätigungsbericht oder mit einem eventuellen Empfangs-Bestätigungsbericht mithilfe einer Modulation vom Typ QPSK zu multiplexen.

12. Terminal nach einem der Ansprüche 7 bis 11,
**dadurch gekennzeichnet,**
**dass** es Messeinrichtungen (MM) umfasst, die dafür ausgelegt sind, Maße zu ermitteln, die Empfangsfunkkanalqualitäts-Indikatoren genannt werden.

13. Terminal nach Anspruch 12,
**dadurch gekennzeichnet,**
**dass** sich die Maße auf einen Kanal beziehen, der aus einer Gruppe gewählt wird, die zumindest "MCH", "DL-SCH", "BCH" und "SCH" umfasst.

## Claims

1. Processing device (D) for at least one radio communications terminal (UE) capable of, on the one hand, receiving data broadcast via a radio communications network in point-to-multipoint mode over a physical broadcast channel and according to an adaptable modulation and encoding scheme, and on the other hand, of calculating measurements which are representative of radio conditions in effect in at least the cell in which it is located;
said measurements being indicators of radio channel reception quality, comprising processing means (MT) arranged to calculate an interval of values to which a measurement belongs, in order to determine a state corresponding to this interval of values among predetermined states, each state being associated with a predefined interval of radio channel reception quality;
generating a state message dedicated to the calculated state; and
commanding said radio terminal (UE) to transmit said state message, comprising data which is representative of the value of at least one corresponding measurement carried out by said terminal, to said radio network over part of the time/frequency/code domain of the random access channel dedicated to the calculated state, for at least said cell under consideration.

2. Device according to claim 1, **characterized in that** said authorized random access channel is dedicated to uploading state messages to said radio network, and is different to the random access channel used by said radio terminal (UE) to carry out an initial request for connection.

3. Device according to claim 1, **characterized in that** said processing means (MT) are arranged so as to command said radio terminal (UE) present in a cell to multiplex the authorized random access channel using time, frequency or code, with a random access channel used by said radio terminal (UE) to request an initial connection.

4. Device according to claim 3, **characterized in that** said processing means (MT) are arranged, when a same authorized random access channel is used to upload state messages and connection requests, so as to integrate, in the state message or connection request to be uploaded by the remote terminal (UE), data representing the type of said message, said type being selected from a state message and a connection request.

5. Device according to claim 1, **characterized in that** said processing means (MT) are arranged so as to command at least one radio terminal (UE) present in a cell to multiplex said state message, generated in the frequency domain, in a dedicated subcarrier.

6. Device according to claim 1, **characterized in that** said processing means (MT) are arranged so as to command at least one radio terminal (UE) present in a cell to multiplex said state message, generated in the time domain, in a subframe dedicated to said calculated state.

7. Radio communications terminal (UE) for, on the one hand, receiving data broadcast via a radio communications network in point-to-multipoint mode over a physical broadcast channel and according to an adaptable modulation and encoding scheme, and on the other hand, for calculating measurements which are representative of radio conditions in effect in at least the cell in which it is located, comprising a device according to any one of claims 1 to 6.

8. Terminal according to claim 7, **characterized in that** it comprises multiplexing means (MM) arranged so as to multiplex said state message, generated in the frequency domain, in a dedicated subcarrier within said signalling frame.

9. Terminal according to claim 7, **characterized in that** it comprises multiplexing means (MM) arranged so as to multiplex said state message, generated in the time domain, in a subframe dedicated to said calculated state within said signalling frame.

10. Terminal according to any one of claims 7 to 9, **characterized in that** it comprises pre-multiplexing means (MPM) arranged so as to multiplex said state message with an optional report on lack of receipt or with an optional report on acknowledgement of receipt.

11. Terminal according to claim 10, **characterized in that** said pre-multiplexing means (MPM) are arranged so as to multiplex said state message, generated with an optional report on lack of receipt or with an optional report on acknowledgement of receipt, using QPSK-type modulation.

12. Terminal according to any one of claims 7 to 11, **characterized in that** it comprises measuring means (MM) arranged so as to carry out measurements designated as indicators of radio channel reception quality.

13. Terminal according to claim 12, **characterized in that** said measurements relate to a channel selected from the group comprising at least "MCH", "DL-SCH", "BCH" and "SCH".
